# EUROPEAN PATENT SPECIFICATION

(11) **EP 1 309 126 B1**
(45) Date of publication and mention of the grant of the patent: **07.02.2007**
(21) Application number: 02023976.0
(22) Date of filing: 25.10.2002
(51) Int. Cl.: H04L 12/28, H04L 29/06

(54) **Method for transmitting data from server of virtual private network to mobile node**
Verfahren zur Datenübertragung aus einem VPN Server in einem mobilen Knoten
Méthode de transmission de données d'un serveur VPN vers un noeud mobile

(30) Priority: 26.10.2001 KR 2001066473
(43) Date of publication of application: 07.05.2003
(73) Proprietor: SAMSUNG ELECTRONICS CO., LTD., Suwon-City, Kyungki-do (KR)
(72) Inventor: Jung, Tae-Sung, Suwon-shi, Kyonggi-do (KR)
(74) Representative: Grünecker, Kinkeldey, Stockmair & Schwanhäusser Anwaltssozietät

(56) References cited:
- WO-A-01/06734
- US-A- 6 016 318
- PERKINS C: "RFC 2002: IP Mobility Support" RFC, October 1996 (1996-10), XP002123919 Retrieved from the Internet: <URL:http://axp1.csie.ncu.edu.tw/ctseng/mo bile98-2/rfc2002.html> [retrieved on 1999-11-25]
- JAMES D. SOLOMON: "Mobility IP the Internet unplugged" 1998 , PRENTICE HALL , NEW JERSEY, US XP002233555 * page 72 - page 88 * * page 173 - page 196 * * page 199 - page 217 *

## Description

### BACKGROUND OF THE INVENTION

### 1. Field of the Invention

The present invention relates generally to a VPN (Virtual Private Network), and in particular, to a data transmitting/receiving method for a mobile node over a VPRN (Virtual Private Router Network). An example of such as method and system can be found in WO-A-01/06734.

### 2. Description of the Related Art

As is implied by its name, a mobile node (MN) is characterized by its mobility. With mobility guaranteed, a mobile user uses the MN for a voice call or data communication. In light of no limitations in a location, MNs allow multiple users to receive data services such as Internet access, while roaming. Methods and systems for providing mobile services more reliably are currently being developed. Assignment of permanent IP (Internet Protocol) addresses to MNs is essential in stably providing a data service with mobility ensured. Therefore, studies are made on assignment of mobile IP addresses to MNs.

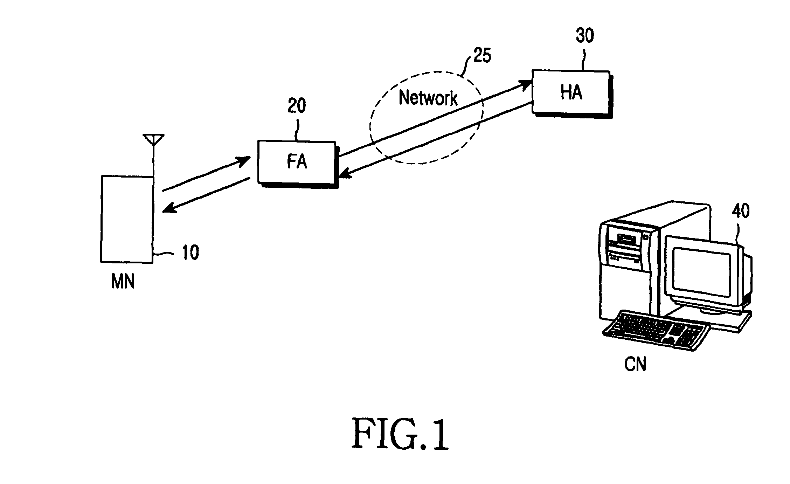

FIG. 1 illustrates the configuration of a mobile IP network for assigning mobile IP addresses to MNs. The configuration of the network and location registration will be described. Referring to FIG. 1, an MN 10 performs a location registration with a base station at system initialization, or when location registration is needed. Since the MN 10 is mobile as stated above, it may send a location registration signal when it is away from its home network, for example, from the U.S. although it has been registered with a service provider in Korea. This is possible as far as a particular service protocol is set between mobile service providers. The location registration will be described with reference to FIG 1.

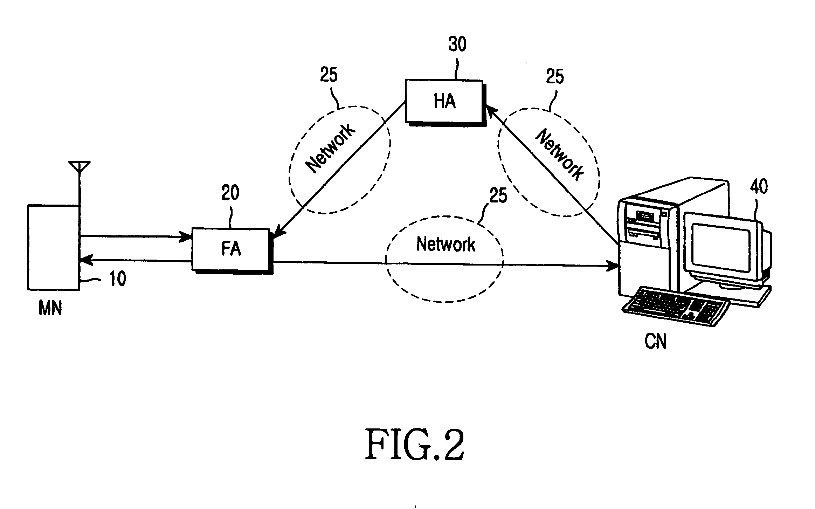

The MN 10 wirelessly sends a Registration Request message to an FA (Foreign Agent) 20 acting as a base station. The FA 20 then forwards a Registration Request message with the address of the FA 20 included to an HA (Home Agent) 30 of the MN 10 over a predetermined network 25. The HA 30 stores the address of the FA 20 from the data received from the FA 20. That is, the HA 30 stores a temporary address of the MN (which is referred to as a care-of-address (COA)) being the address of the FA 20. Then the HA 30 sends a Registration Reply message for the Registration Request message to the FA 20. By this procedure, the location of the MN 10 is registered. The MN 10 can receive data from a CN (Correspondent Node) 40 only after the location registration with the HA 30. The CN 40 is a host in a general network, which sends/receives data to/from the MN 10. A procedure for data transmission between the MN 10 and the CN 40 will be described with reference to FIG. 2.

FIG. 2 is a schematic diagram illustrating data transmission over a network for assigning a mobile IP address to an MN. First, a description will be made below of data transmission between the CN 40 and the MN 10 after the MN's registration with the HA 30 in the procedure explained above. Networks 25 between the FA 20 and the HA 30, between the HA 30 and the CN 40, and between the FA 20 and the CN 40 may be the same or different. In one aspect, the networks 25 are IP networks.

The CN 40 is a computer that is to send data to the MN 10. For data transmission, the CN 40 sends the data to the HA 30 over the IP network 25. The HA 30, which has the addresses of FAs under its management, forwards an IP address of an FA that the MN 10 belongs to, to the FA 20 over the IP networks 25. Then the FA 20 forwards the data to the MN 10. The data includes the address of the CN 40. On the other hand, when the MN 10 is to send data to the CN 40, it sends the data to the FA 20 and the FA 20 forwards the data to the CN 40 without passing through the HA 30 because the MN 10 has requested data transmission with the destination address included. Accordingly, data may be transmitted and received in different routes.

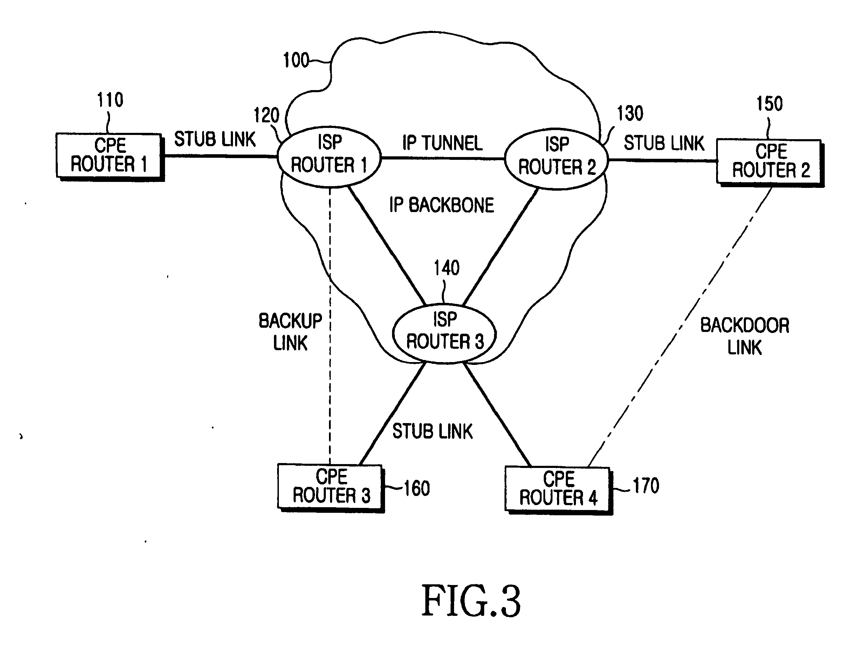

There are two kinds of VPNs: one is a dedicated WAN (Wide Area Network) connecting sites by permanent links and the other is a dial network using dial-up connections over the PSTN (Public Switched Telephone Network). Connections between IP-based VPNs through routers and data transmission over the VPNs will be described below in connection with FIG. 3.

In FIG. 3, an IP backbone is connected to routers. ISP (Internet Service Provider) routers 120, 130 and 140 are edge routers connected to CPE (Customer Premise Equipment) routers 110, 150, 160 and 170. A CPE router connects a mobile subscriber at a certain point to a desired VPN, and an ISP router is an equipment operated by an ISP to route data received from the CPE router to the desired VPN. The ISP routers 120, 130 and 140 in an IP network 100 carry out data transmission/reception by IP tunneling. A stub link is established between an ISP router and a CPE router. When necessary, a backup link is established between a CPE router and an ISP router, and a backdoor link is established between CPE routers at different locations. Accordingly, the configured network shown in FIG. 3 generally provides an Internet service and various communications.

The existing VPNs support data communication for users over the Internet by forming IP tunnels wherever the users are located. However, since MNs roam, it is impossible to store all information about the MNs to an ISP in a certain area for data transmission/reception. This means that a server in a VPN cannot initiate data transmission to an MN.

### SUMMARY OF THE INVENTION

It is, therefore, an object of the present invention to provide a method for enabling a server in a VPN to carry out an initial data transmission to an MN.

It is another object of the present invention to provide a method for enabling a server in a VPN to initially send data to an MN with no communication link established between the server and the MN.

To achieve the above and other objects, there is provided a method of transmitting data from a VPN server to an MN. According to one aspect of the present invention, the MN requests a VPN service registration to an FA to which the MN belongs. The FA notifies ISP routers connected to the FA that the MN has requested the VPN service registration. Then, upon generation of data destined for the MN in the VPN server, a CPE router obtains information about the FA from an HA through an ISP router connected to the CPE. The ISP router connected to the CPE router routes the data to the FA using the FA information and the FA forwards the routed data to the MN.

According to another aspect of the present invention, the MN requests a VPN service registration to an FA to which the MN belongs. The FA notifies ISP routers connected to the FA that the MN has requested the VPN service registration. Upon receipt of VPN service data destined for the MN from the VPN server, the FA routes the VPN service data to the MN.

### BRIEF DESCRIPTION OF THE DRAWINGS

The above and other objects, features and advantages of the present invention will become more apparent from the following detailed description when taken in conjunction with the accompanying drawings in which:
FIG. 1 schematically illustrates the configuration of a mobile IP network for assigning mobile IP addresses to MNs;
FIG. 2 schematically illustrates data transmission over a network for assigning mobile IP addresses to MNs;
FIG. 3 schematically illustrates the configuration of a network where IP-based VPNs are connected through routers;
FIG. 4 schematically illustrates the configuration of a VPN over which a server sends data to an MN;
FIG. 5 illustrates the devices of FIG. 4 with their IP addresses assigned;
FIG. 6 illustrates the format of a typical Registration Request message by which an MN registers its location with an FA over the VPN;
FIG. 7 illustrates the format of a VPN Service Registration Request message according to an embodiment of the present invention;
FIG. 8 illustrates the format of a message notifying a VPN service request of an MN from an FA to corresponding ISP edge routers according to another embodiment of the present invention; and
FIG. 9 is a diagram illustrating a signal flow for sending data from a server to an MN over the VPN according to a third embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

For clarity of description, a type of VPN, VPRN (Virtual Private Routed Network) will be described. The VPRN is defined to be the emulation of a dedicated IP-based routed network between customer sites.

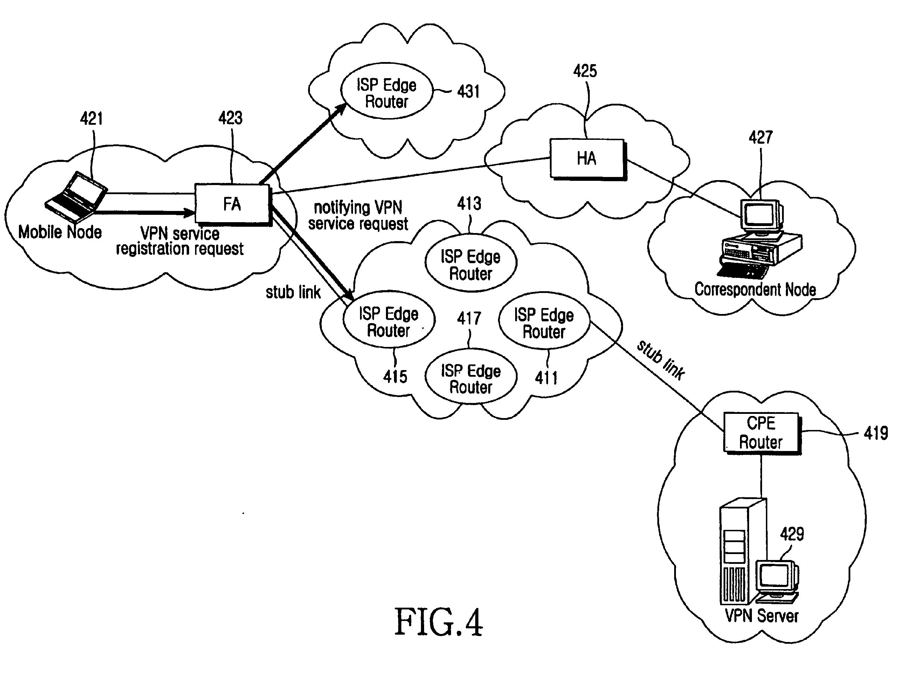

Referring to FIG. 4, an IP backbone is connected to routers. ISP edge routers 411, 413, 415 and 417 are connected to a CPE router 419. The CPE router 419, for example, is an equipment used for an MN 421 at a certain location to connect to a VPN. The ISP edge routers 411, 413, 415 and 417 are ISP-operated devices for connecting data received from the CPE router 419 to a desired VPN. The ISP edge routers 411, 413, 415 and 417 are an IP network and data transmission between them is carried out by IP tunneling. A stub link is established between the CPE router 419 and the ISP edge routers 411, 413, 415 and 417. Hereinafter, the ISP edge routers are referred to as the ISP routers.

The MN 421 sends a Registration Request message to an FA 423 and the FA 423 forwards the Registration Request message with the address of the FA 423 to an HA 425 of the MN 421 over an IP network. The HA 425 stores the address of the FA 423 where the MN 421 is located, that is, the COA of the MN 421. Then the HA 425 sends a Registration Reply message for the Registration Request message to the FA 423. Thus, the MN 421 completes its location registration with the HA 425. In one aspect, the registration allows the MN 421 to receive data from a CN 427.

In one aspect, when the MN 421 sends a VPN Service Registration Request message to the FA 423, the FA 423 notifies its connected ISP routers 415 and 431 of the VPN Service Registration Request. The ISP routers 415 and 431 then recognize that the MN 421 is able to receive a VPN service, that is, it has been registered for the VPN service. In this manner, a VPN server may send data initially to the MN 421 that belongs to the FA 423.

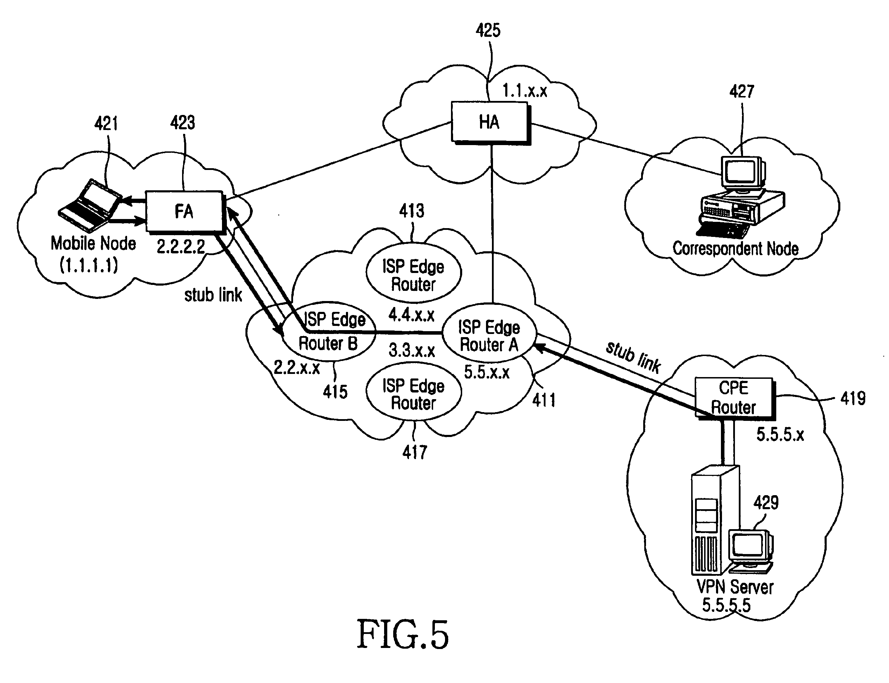

Now a description will be made of initial data transmission from the VPN server to the MN over the thus-constituted VPN with IP addresses assigned to them with reference to FIG. 5. FIG. 5 illustrates the devices of FIG. 4 with their IP addresses assigned.

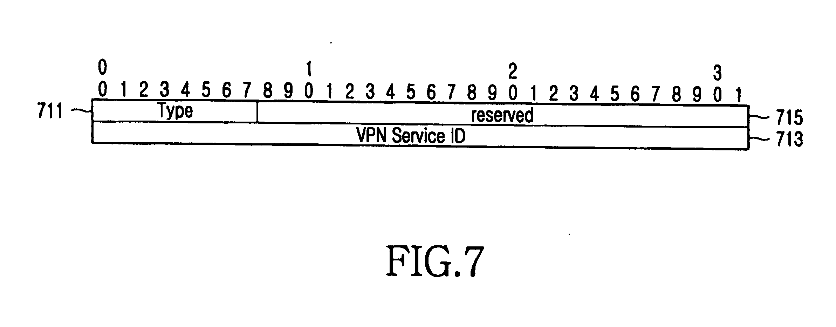

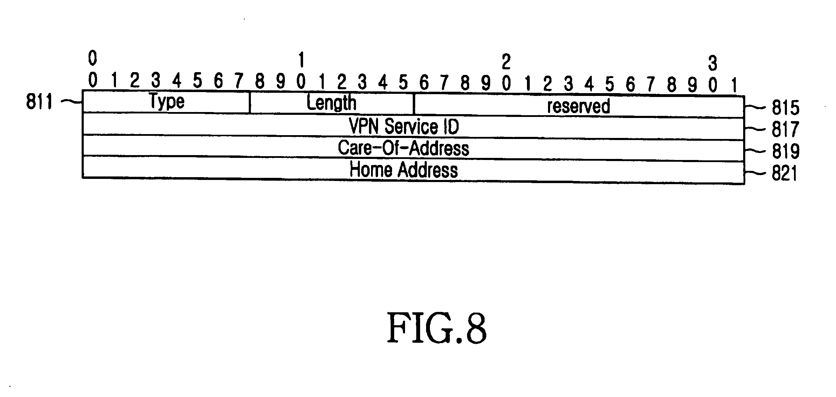

Referring to FIG. 5, the MN 421 having an IP address of 1.1.1.1, for example, sends a VPN Service Registration Request message to the FA 423 having an IP address of 2.2.2.2, for example. The format of the VPN Service Registration Request message will be described later with reference to FIG. 7. The FA 423 notifies the ISP router B 415 of the VPN Service Registration Request. While only the ISP router B 415 is illustrated as one related with the FA 423 in FIG. 5, the VPN Service Registration Request may be notified to each ISP router if a plurality of ISP routers are connected to the FA 423. The ISP router B has an IP address of 2.2.X.X, for example. The format of a message notifying the VPN Service Registration Request will be described later with reference to FIG. 8.

In this state, if the VPN server 429 having an IP address of 5.5.5.5, for example, has data destined for the MN 421, it searches for an FA to which the MN 421 belongs. To do so, the VPN server 429 requests its CPE router 419 to search for the FA 423 of the MN 421. Here, the CPE router 419 has an IP address of 5.5.5.X, for example. Then, the CPE router 419 requests its connected ISP router A 411 having an IP address of 5.5.X.X, for example, to search for the FA 423 of the MN 421.

The ISP router A 411 in turn requests the HA 425 to search for the FA 423, telling it the IP address of the MN 421. This will be described below in more detail.

For the VPN server 429 to detect the IP address of the FA 423, the ISP router A 411 requests the HA 425 having an IP address of 1.1.X.X, for example, to search for the FA 423 of the MN 421. Here, the ISP router A 411 tells the HA 425 the IP address, 1.1.1.1 of the MN 421 to enable the HA 425 to detect the IP address of the FA 423. The HA 425 then notifies the ISP router A 411 of the IP address of the FA 423.

Upon receipt of the IP address of the FA 423 of the MN 421, the ISP router A 411 detects an ISP router corresponding to the IP address of the FA 423, that is, the ISP router B 415 among its connected ISP routers 413, 415 and 417. For example, the ISP router 415 has an IP address of 2.2.X.X. Then, the ISP router A 411 is connected to the ISP router B 415, which is in turn connected to the CPE router 419, to thereby allow the VPN server 429 to send data to the ISP router B 415. Upon receipt of the data, the ISP router B 415 chooses the FA 423 according to the IP address of the MN 421 and sends the data to the FA 423. The FA 423 then forwards the data to the MN 421.

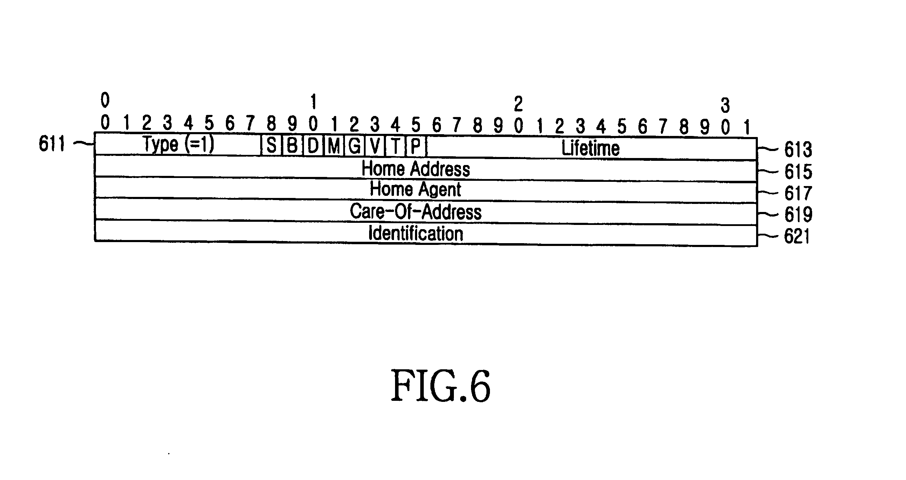

FIG. 6 illustrates the format of a typical Registration Request message directed from the MN to the FA and FIG. 7 illustrates the format of a VPN Service Registration Request message according to an embodiment of the present invention.

Referring to FIG. 6, the Registration Request message comprises a message type area 611, a lifetime area 613, a home address area 615 indicating the IP address of a corresponding MN, an HA area 617 providing information about an HA, a COA area 619 indicating the IP address of an FA at which the MN is located, an identification area 621, and a reserved area (not shown).

The VPN Service Registration Request message is formed by adding the areas illustrated in FIG. 7 to the typical Registration Request message illustrated in FIG. 6. That is, a VPN service ID 713 is set in the reserved area 715 of the Registration Request message.

When the MN sends a VPN Service Registration Request message to a corresponding FA, the FA notifies its connected ISP routers of the VPN Service Request by a message so that the ISP routers recognize the VPN Service Registration Request from the MN.

The message notifying the VPN Registration Request will be described in detail referring to FIG. 8. FIG. 8 illustrates the format of the VPN Service Registration Request Notification message according to one embodiment of the present invention.

Referring to FIG. 8, the VPN Service Registration Request Notification message comprises a message type area 811 indicating the type of the message, a length area 813, a reserved area 815, a VPN service ID area 817 indicating a VPN service ID which a MN requests a VPN Service Registration, a COA area indicating a COA of an FA which transmits the VPN Service Regisatration Request Message 819, and an HA area 821 indicating an IP address of the MN which requests a VPN Service Regisatration.

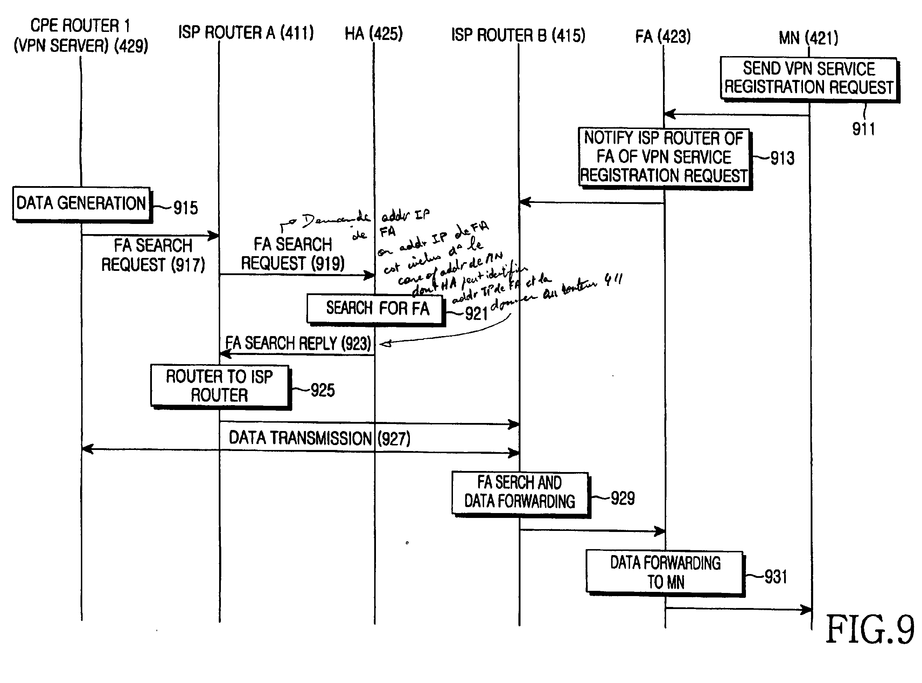

Now data transmission initiated from the VPN server to the MN will be described with reference to FIG. 9.

Referring to FIG. 9, the MN 421 sends a VPN Service Registration Request message to the FA 423 to receive a VPN service in step 911. The FA 423 sends a VPN Service Registration Request Notification message to its connected ISP routers, that is, the ISP router B 415 shown in FIG. 5 in step 913.

In the state where the VPN service registration request has been completed, upon generation of data destined for the MN 421 in the VPN server 429 in step 915, the CPE router 419 requests its connected ISP router, that is, the ISP router A 411 to search for the FA to which the MN 421 belongs in step 917. Then, the ISP router A 411 sends an FA IP Address Search Request message to the HA 425 in step 919. The HA 425 then detects the IP address of the FA 423 of the MN 421 using the IP address of the MN 421 included in the FA IP Address Search Request message in step 921. In step 923, the HA 425 sends an FA IP Address Reply message including the IP address of the FA 423 to the ISP router A 411. The ISP router A 411 routes to an ISP router corresponding to the IP address of the FA 423, that is, the ISP router B 415 in step 925. Thus, connections are made between the ISP router A 411 and the ISP router B 415 and between the CPE router 419 and the ISP router B 415. Then, VPN server 429 sends the data to the ISP router B 415 in step 927 and the ISP router B 41 5 detects the FA 423 having the IP address set in the FA IP Address Reply message and forwards the data to the FA 423 in step 929. Finally, the FA 423 forwards the data to the MN 421 referring to the IP address of the MN 421 in step 923.

In accordance with the present invention as described above, a server in a VPN may search for an FA to which an MN belongs in real time. Therefore, the server may initiate data transmission to the MN.

While the invention has been shown and described with reference to certain preferred embodiments thereof, it will be understood by those skilled in the art that various changes in form and details may be made therein without departing from the scope of the invention as defined by the appended claims.

## Claims

1. A method for transmitting data from a Virtual Private Network server (419, 429) to a Mobile Node (421), **characterized by** the steps of:
the Mobile Node requesting (911) a Virtual Private Network service registration to a Foreign Agent (423) to which the Mobile Node belongs;
the Foreign Agent notifying (913) one or more Internet Service Provider routers (411-417) connected to the Foreign Agent that the Mobile Node has requested the Virtual Private Network service registration;
the Home Agent detecting (921) an address of the Foreign Agent; and
the Virtual Private Network server transmitting (927, 929, 931) the data to the Mobile Node via one of the Internet Server Provider routers connected to the Foreign Agent and the Foreign Agent when the data is destined for the Mobile Node.

2. The method of claim 1, wherein the Mobile Node sends a Virtual Private Network service identifier (713, 817) to the Foreign Agent when the Mobile Node requests the Virtual Private Network service registration, said identifier indicating a desired Virtual Private Network service.

3. The method of claim 2, wherein the Foreign Agent sends the Virtual Private Network service identifier when the Foreign Agent notifies the Virtual Private Network service registration requested by the Mobile Node.

4. The method of one of claims 1to 3, wherein said one or more Internet Service Provider routers are further connected to a Home Agent (425), and the method further comprises the step of:
one of said Internet Service Provider routers obtaining (919-923) information about the Foreign Agent from the Home Agent in response to a Foreign Agent search request received from the Virtual Private Network server,
wherein the step of transmitting the data to the Mobile Node via the Foreign Agent comprises:
the Internet Service Provider router connected to the Virtual Private Network server using (925) the Foreign Agent information to make a connection from the Virtual Private Network server to the Foreign Agent.

5. The method of claim 4, wherein the Foreign Agent information is an address of the Foreign Agent.

6. The method of claim, 5, wherein the address is an Internet Protocol address.

7. The method of one of claims 4 to 6, wherein said Internet Service Provider router obtaining said Foreign Agent information is connected to a Customer Premise Equipment router (419) to which the Virtual Private Network server belongs.

8. The method of one of claims 1 to 7, wherein the Foreign Agent sends the address of the Mobile Node when the Foreign Agent notifies the Virtual Private Network service registration requested by the Mobile Node.

9. The method of one of claims 1 to 8, wherein a Virtual Private Network which the Virtual Private Network server belongs to is based on an Internet Protocol network.

10. A system comprising a Virtual Private Network server (419, 429), at least one Internet Service Provider router (411-417), a Foreign Agent (423), and a Mobile Node (421), adapted to perform each step of the method of one of claims 1 to 9.

## Patentansprüche

1. Verfahren zum Übertragen von Daten von einem VPN (Virtual Private Network)-Server (419, 429) zu einem Mobile Node (421), **gekennzeichnet durch** die folgenden Schritte:
der Mobile Node fordert eine VPN-Dienstregistrierung bei einem Foreign Agent (423), zu dem der Mobile Node gehört, an (911);
der Foreign Agent teilt einem oder mehreren Routern von Internet-Service-Providern (411-417), die mit dem Foreign Agent verbunden sind, mit (913), dass der Mobile Node die VPN-Dienstregistrierung angefordert hat;
der Home Agent erfasst (921) eine Adresse des Foreign Agent; und
der VPN-Server überträgt (927, 929, 931) die Daten zu dem Mobile Node über einen der ISP-Router, die mit den Foreign Agent verbunden sind, und dem Foreign Agent, wenn die Daten für den Mobile Node bestimmt sind.

2. Verfahren nach Anspruch 1, wobei der Mobile Node eine VPN-Dienstkennung (713, 817) zu dem Foreign Agent sendet, wenn der Mobile Node die VPN-Dienstregistrierung anfordert, wobei die Kennung einen gewünschten VPN-Dienst anzeigt.

3. Verfahren nach Anspruch 2, wobei der Foreign Agent die VPN-Dienstkennung sendet, wenn der Foreign Agent die die durch den Mobile Node angeforderte VPN-Dienstregistrierung mitteilt.

4. Verfahren nach einem der Ansprüche 1 bis 3, wobei ein oder mehrere ISP-Router des Weiteren mit einem Home Agent (425) verbunden sind, und das Verfahren des Weiteren die folgenden Schritte umfasst:
einer der ISP-Router erlangt (919-923) eine Information über den Foreign Agent von dem Home Agent in Reaktion auf eine Suchanforderung des Foreign Agent, die von dem VPN-Server empfangen wird,
wobei der Schritt des Übertragens der Daten zu dem Mobile Node über den Foreign Agent umfasst:
der ISP-Router, der mit dem VPN-Server verbunden ist, verwendet (925) die Information über den Foreign Agent, um eine Verbindung von dem VPN-Server zu dem Foreign Agent herzustellen.

5. Verfahren nach Anspruch 4, wobei die Information über den Foreign Agent eine Adresse des Foreign Agent ist.

6. Verfahren nach Anspruch 5, wobei die Adresse eine IP (Internet Protocol)-Adresse ist.

7. Verfahren nach einem der Ansprüche 4 bis 6, wobei der ISP-Router, der die Information über den Foreign Agent erlangt, mit einem CPE (Customer Premise Equipment)-Router (419) verbunden ist, zu dem der VPN-Server gehört.

8. Verfahren nach einem der Ansprüche 1 bis 7, wobei der Foreign Agent die Adresse des Mobile Node sendet, wenn der Foreign Agent die durch den Mobile Node angeforderte VPN-Dienstregistrierung mitteilt.

9. Verfahren nach einem der Ansprüche 1 bis 8, wobei ein VPN, zu dem der VPN-Server gehört, auf einem IP-Netzwerk basiert.

10. System, das einen VPN-Server (419, 429), wenigstens einen ISP-Router (411, 417), einen Foreign Agent (423) und einen Mobile Node (421) umfasst und so eingerichtet ist, dass es jeden Schritt des Verfahrens nach einem der Ansprüche 1 bis 9 durchführt.

## Revendications

1. Procédé pour transmettre des données depuis un serveur de Réseau Privé Virtuel (419, 429) vers un Noeud Mobile (421) **caractérisé par** les étapes consistant en :
la demande (911) par le Noeud Mobile, à un Agent Etranger (423) auquel le Noeud Mobile appartient, d'une inscription de service de Réseau Privé Virtuel ;
la notification (913) par l'Agent Etranger à un ou plusieurs routeurs de Fournisseur de Services Internet (411 à 417) connectés à l'Agent Etranger du fait que le Noeud Mobile a demandé l'inscription de service de Réseau Privé Virtuel ;
la détection par l'Agent Domestique (921) d'une adresse de l'Agent Etranger ; et
la transmission (927, 929, 931) par le serveur de Réseau Privé Virtuel des données au Noeud Mobile par l'intermédiaire de l'un parmi les routeurs de Fournisseur de Services Internet connectés à l'Agent Etranger et l'Agent Etranger quand les données sont destinées au Noeud Mobile.

2. Procédé selon la revendication 1 dans lequel le Noeud Mobile envoie un identifiant de service de Réseau Privé Virtuel (713, 817) à l'Agent Etranger quand le Noeud Mobile demande l'inscription de service de Réseau Privé Virtuel, ledit identifiant indiquant un service de Réseau Privé Virtuel désiré.

3. Procédé selon la revendication 2 dans lequel l'Agent Etranger envoie l'identifiant de service de Réseau Privé Virtuel quand l'Agent Etranger notifie l'inscription de service de Réseau Privé Virtuel demandée par le Noeud Mobile.

4. Procédé selon l'une quelconque des revendications 1 à 3 dans lequel lesdits un ou plusieurs routeurs de Fournisseur de Services Internet sont de plus connectés à un Agent Domestique (425) et le procédé comprend de plus les étapes consistant en :
l'obtention (919 à 923), à partir de l'Agent Domestique, par l'un desdits routeurs de Fournisseur de Services Internet, d'une information sur l'Agent Etranger en réponse à une demande de recherche de l'Agent Etranger reçue depuis le serveur de Réseau Privé Virtuel,
dans lequel l'étape de transmission des données au Noeud Mobile par l'intermédiaire de l'Agent Etranger comprend :
l'utilisation (925) de l'information d'Agent Etranger par le routeur de Fournisseur de Services Internet connecté au serveur de Réseau Privé Virtuel pour réaliser une connexion depuis le serveur de Réseau Privé Virtuel vers l'Agent Etranger.

5. Procédé selon la revendication 4 dans lequel l'information d'Agent Etranger est une adresse de l'Agent Etranger.

6. Procédé selon la revendication 5 dans lequel l'adresse est une adresse de Protocole Internet.

7. Procédé selon l'une quelconque des revendications 4 à 6 dans lequel ledit routeur de Fournisseur de Services Internet obtenant ladite information d'Agent Etranger est connecté à un routeur d'Equipement de Local Client (419) auquel le serveur de Réseau Privé Virtuel appartient.

8. Procédé selon l'une quelconque des revendications 1 à 7 dans lequel l'Agent Etranger envoie l'adresse du Noeud Mobile quand l'Agent Etranger notifie l'inscription de service de Réseau Privé Virtuel demandée par le Noeud Mobile.

9. Procédé selon l'une quelconque des revendications 1 à 8 dans lequel un Réseau Privé Virtuel auquel appartient le serveur de Réseau Privé Virtuel est basé sur un réseau à Protocole Internet.

10. Système comprenant un serveur de Réseau Privé Virtuel (419, 429), au moins un routeur de Fournisseur de Services Internet (411 à 417), un Agent Etranger (423) et un Noeud Mobile (421), configuré pour effectuer chaque étape du procédé selon l'une quelconque des revendications 1 à 9.
